# EUROPEAN PATENT SPECIFICATION

(11) **EP 0 619 947 B1**
(45) Date of publication and mention of the grant of the patent: **23.04.1997**
(21) Application number: 94200697.4
(22) Date of filing: 22.03.1994
(51) Int. Cl.: A21D 2/00, A21D 8/04, A21D 10/00

(54) **Yeast formulation for production of baked products**
Hefeformulierung zur Herstellung von Backwaren
Composition de levure pour production des produits de boulangerie

(30) Priority: 31.03.1993 EP 93200928
(43) Date of publication of application: 19.10.1994
(73) Proprietor: GIST-BROCADES N.V., NL-2600 MA Delft (NL)
(72) Inventor: Hille, Jan Dirk Rene, NL-3724 BN Wouw (NL); Farin, Farrokh, NL-2394 HC Hazerswoude-Rijndijk (NL)
(74) Representative: Matulewicz, Emil Rudolf Antonius, Dr.

(56) References cited:
- EP-A- 0 246 554
- EP-A- 0 262 669
- EP-A- 0 310 460
- EP-A- 0 375 558
- EP-A- 0 468 731
- FR-A- 1 509 676
- FR-A- 2 233 941
- GB-A- 236 210
- CHEMICAL ABSTRACTS, vol. 71, no. 17, 27 October 1969, Columbus, Ohio, US; abstract no. 79951h, V.L. KRETOVICH ET AL. 'Dough preparation' page 252 ;column 1 ;

## Description

### Technical field

The present invention relates to a yeast formulation, a process for preparing the formulation and to a process for preparing baked products using the yeast formulation.

### Background of the invention

In the preparation of baked products, yeasts and processing aids are used to obtain standardized high quality products.

In baking, besides bakers' yeast, processing aids such as bread improvers are used, consisting of oxidising and reducing agents, enzymes such as redox enzymes, α-amylases, amyloglucosidases, hemicellulases, cellulases, proteases, emulsifiers and fatty materials.

Yeast, enzymes and redox agents are generally added separately to the dough. Yeast may be added in cream, compressed, active dry or instant dry form. Enzymes may be added in dry powder or in dissolved form. Redox agents are in most cases added in powder form.

Weighing and dosing each of these various ingredients requires a separate of action to be carried out by the operator of the production process. The greater the number of actions to be carried out, the greater is the chance of an error occurring resulting in a product poorer quality. Moreover working with dusty materials may initiate an allergic reaction.

Mixing bread improving ingredients with dry granular yeast or instant dry yeast may lead to a homogeneous product directly after mixing. However, after transport and storage prior to the use, this type of product will have become inhomogeneous (see Example 1 hereafter).

To solve these problems various solutions have been proposed.

EP-A-0310460 describes the use of degradable capsules, filled with bread improving components, which are pressed in the surface of blocks of compressed yeast or packed in pouches together with instant dry yeast. This reduces the number of weighings and the dust problem. However, because the amount of bread improver present in one capsule is fixed, the quantities and ratios of wheat flour, yeast and other ingredients used are also fixed.

J 54098352 describes the use of gelatine capsules, in which both yeast and bread improver components are present. This use also has the drawback, that only fixed quantities and ratios of wheat flour per capsule can be mixed into a dough.

J 73040748 describes the mixing of granular semi-dry yeast (moisture content of 35 - 45%) with a wheat flour improving agent to be used in breadmaking. The stability of both flour improving agent and yeast is very limited due to high water content, so special attention has to be paid to storage and transport conditions.

DE 2515029 describes the production of active dry yeast by vacuum drying which yeast is coformulated with spraydried malt extract or maltodextrins. Malt extract or maltodextrins are added as dewatering agents. However, this vacuum drying technique cannot be applied economically on a commercial scale because there is an unacceptable loss in leavening activity. Moreover, in general yeast produced using this technique will be in powder or dust form, which may cause an allergic reaction.

GB-A-236 210 discloses yeast-containing backing powders, Chemical Abstracts, vol. 71, no. 17, 27/10/1969, Columbus, Ohio, US, Abstr. no. 79951h discloses a dough preparation with yeast, FR-A 2 233 941 discloses a bread dough, EP-A-0 468 731 discloses a bread, EP-A-0 262 669 discloses fat compositions for bakery products, FR-A-1 509 676 discloses a powder used for bread and EP-A-0 375 558 discloses a flour for bread.

### Summary of the invention

The present invention provides a homogeneous composition comprising yeast and an effective amount of a processing aid which composition maintains its homogeneity for at least two weeks. This composition can be used for in the preparation of baked products.

Further, the invention relates to a process, in which yeast and a processing aid are combined to form a homogeneous product without serious loss of activity of any of the constituents. The present invention thus provides a process for the production of a homogeneous composition comprising yeast and an effective amount of a processing aid which process comprises adding the processing aid in dry or solution form to the yeast to form a mixture and simultaneously or subsequently extruding the mixture and optionally drying it.

The homogenity of the product is maintained during storage or transport of the product. Once prepared products are indistinguishable from regular compressed or instant dry yeasts in their ability to be used as yeast. The products are convenient to use in the production of bakery products because of a decrease in the number of materials to be handled during the production, resulting in an efficient, non-dusty operation. Thus, the present invention also provides a process for the production of a baked product which comprises adding to the baking mixture a homogeneous composition as defined above.

### Detailed description of the invention.

The present invention relates to a convenient, efficient, and non-dusty method for introducing yeast together with at least one processing aid in the preparation of a baked product. By 'homogeneous' is meant that fractions separated in a sieve with pores of 0.15 mm diameter, substantially have the same composition based on the specific activity of the processing aid per gram dry matter.

By "baked products" is meant all products based on cereals such as wheat and/or rye flour, yeast, water, and in most cases salt, with or without compounds such as fats, emulsifiers, enzymes, sugar, etc., all mixed to a homogeneous dough or batter, left for some time at a certain temperature, and baked to produce consumable, airy products.

By "processing aids" is meant all flour improving constituents, dough conditioners, crumb softeners and other bread improver constituents.

The manufacture of yeast starts with a small sample of a pure culture. This sample is used to inoculate the first of a series of fermentors of successively increasing size. The final stage fermentations are carried out in fermentors of 100 m³ net volume. Fermentation time is typically from 12 to 20 hours, in which some 20,000 - 30,000 kg of fresh yeast is produced.

Further processing includes separation from the broth by centrifugation, washing, and filtration. The fresh yeast cake from the filters is either packaged, optionally after extrusion to shape the yeast cake, and sold as compressed yeast or extruded through perforated plates and dried in fluid-bed driers to produce instant dry yeast.

The processing aids which may be used according to the present invention preferably comprises (i) an oxidation agent and/or a reducing agent or (ii) an enzyme, emulsifier, sugar or fatty material. More preferably a combination of (i) and (ii) is used. Examples of (i) are ascorbic acid, azodicarbonamide and L-cysteine. The enzyme used may be e.g. a carbohydrase such as α-amylase, amyloglucosidase, hemicellulase, cellulase or glucanase, a protein modifying enzyme such as protease or peptidase, a redox enzyme such as glucose oxidase, sulfhydryloxidase and lipoxidase (lipoxiginase), a peptidyl transferase such as γ-glutamyl transferase or a lipid modifying enzyme such as lipase or phospholipase.

The present invention relates to a method in which the processing aid is homogeneously mixed with the yeast which has been produced e.g. by adding the processing aid in the form of a dry powder or in solution form to a stream of yeast separated from the fermentation broth.

Suitable proportions of ingredients are e.g. ascorbic acid in the range of 1 to 15 g/kg and more preferably 1 to 8 g/kg of the homogeneous compressed yeast composition, or 1 to 50 g/kg and more preferably 1 to 25 g/kg of the homogeneous instant yeast composition, or L-cysteine in the range of 0.1 to 3 g/kg and more preferably 0.1 to 2.5 g/kg of the homogeneous compressed yeast composition or 0.1 to 12 g/kg and more preferably 0.1 to 6 g/kg of the homogeneous instant yeast composition, emulsifiers in the range of 1 to 500 g/kg and more preferably 10 to 300 g/kg of the homogeneous compressed yeast composition, or 1 to 200 g/kg and more preferably 3 to 50 g/kg of the homogeneous instant yeast composition, α-amylases in the range of 400 to 100,000 PU/kg of the homogeneous compressed yeast composition, or 400 to 500,000 PU/kg of the homogeneous instant yeast composition (PU = Phadebas Unit), hemicellulases in the range of 2 x 10³ to 2 x 10⁵ HU/kg of the homogeneous compressed yeast composition or 1 x 10⁴ to 1 x 10⁶ HU/kg of the homogeneous instant yeast composition. Other enzymes such as redox enzymes, pectinases, glucanases, or proteases may be added. Thus the yeast composition according to the present invention usually contains 1-500 g of processing aids per kg yeast. Preferably the yeast composition contains 3-300 g of processing aids per kg yeast.

The processing aids are advantageously added during or just before extrusion of the yeast. The processing aids may be added in powder form, or dissolved in water in a concentrated solution.

When a solution is used, the pH is preferably adjusted at pH 5.5.

The processing aids were found to withstand the prolonged processes involved in drying yeast without substantial loss of activity, which was surprising, particularly in the case of the enzymes.

In prior art processes yeast and processing aids were separately added when producing baked products. Processing aids were often in powder form which could cause dust problems in e.g. the bakery. The use of the coformulated composition according to the present invention, having an indistinguishable physical form from regular yeast as used previously, decreases the number of times powdered materials need to be handled during production and substantially reduces or prevents dusty conditions in the production room e.g. the bakery. The coformulated composition of yeast and a processing aid is homogeneous and stays homogeneous during storage and preferably also during transport.

Compressed yeast is a yeast composition, having a dry matter content from 25 to 35%, more preferably from 27 to 33%, and a protein content from 40 to 65% (N x 6.25), and more preferably from 43 to 58% (N x 6.25). Instant dry yeast is a yeast composition, having a dry matter content from 92 to 98%, more preferably from 94 to 97%, and a protein content from 40 to 65% (N x 6.25), and more preferably from 40 to 56% (N x 6.25). Compressed yeast is generally produced in blocks, having weights from 0.5 to 5 kg, and wrapped in wax paper and packed in cardboard boxes. Instant dry yeast is usually packed in laminated bags and closed either under an inert gas such as nitrogen or under vacuum, to reduce the amount of oxygen, which has a deleterious effect on the performance of dried yeast. Compressed yeast keeps from two to four weeks when stored at temperatures of from 2 to 6°C, and instant dry yeast can keep for years.

The homogeneous compositions of the present invention maintain their homogeneity over the normal periods of storage for yeasts e.g. at least two weeks, preferably at least six weeks, more preferably in the case of instant dry yeast at least six months. The compositions preferably also maintain their hoomogeneity when transported over long distances e.g. transported by road over 1000 km, preferably over 2000 km.

### Description of the specific embodiments

The present invention will be further demonstrated by the following examples. It should be noted that the present invention is by no means limited to these examples.

### Example 1

2,700 g Fermipan® (Gist-brocades), an instant dried yeast, were homogeneously mixed with 36 g ascorbic acid, 6 g fungal α-amylase Fermizyme® P₂₀₀ (Gist-brocades, 4740 PU/g) and 48 g hemicellulase Fermizyme® H₁₀₀₀ (Gist-brocades, hemicellulase activity 13,500 HU/g and α-amylase activity 942 PU/g) in a Hobart mixer. Directly after mixing portions of 450 g were weighed and packed in laminated bags and closed at reduced pressure.

From three packs directly after packing the homogenity of their content was tested by opening the pack at three places: near the top, in the middle, and near the bottom of the pack and drawing samples of 25 g each. In these quantities the levels of ascorbic acid, fungal α-amylase and hemicellulase were analysed according to the following methods:
- ascorbic acid analysis was done according to the method of Boehringer (see Boehringer Mannheim Biochemical Catalogue 1992 Nr. 409677).
- fungal α-amylase activity was determined using Phadebas™ tablets from Pharmacia. In this method the solubilization of dye labelled starch by α-amylase in a buffer pH = 5.5 during 15 minutes at 30°C is measured spectrophotometrically. α-Amylase activity is expressed in Phadebas Units (PU) using an Aspergillus oryzae fungal α-amylase preparation of 10,000 PU/g as an internal standard. One Phadebas Unit defined in this way equals about 10 SKB units, used in the baking industry.
- fungal hemicellulase activity was determined by measuring the amount of reducing sugars produced over a predetermined time period in the micro-assay as described by Leathers T.D., Kurtzman, C.P., Detroy, R.W. (1984) Biotechnol. Bioeng. Symp., 14, 225. In this paper the hemicellulase unit (HU) is also defined.

The results are summarized in Table 1.

The other three packs were stored for two weeks in a refrigerator at 4°C. Afterwards these packs were placed in a normal carton for instant yeast packs and surrounded by normal instant yeast packs. This case was transported by a heavy goods vehicle over about 2500 km such that the three packs were in a vertical position. Afterwards the three packs were again stored in the refrigerator for another four weeks. Then the homogenity was tested in the above described way. Analysis results are summarized in Table 1.

**TABLE 1**

| | Homogeneous mix | | Relative amounts found back (%) | |
|---|---|---|---|---|
| | | | directly | after transport |
| Top | ascorbic acid | 0.013 g/g | 101.5 | 85.2 |
| | α-amylase | 26 PU/g | 98.5 | 91.4 |
| | hemicellulase | 232 HU/g | 100.8 | 92.5 |
| Middle | ascorbic acid | 0.013 g/g | 102.0 | 89.2 |
| | α-amylase | 26 PU/g | 98.1 | 94.6 |
| | hemicellulase | 232 HU/g | 99.6 | 91.4 |
| Bottom | ascorbic acid | 0.013 g/g | 99.1 | 112.3 |
| | α-amylase | 26 PU/g | 101.7 | 108.6 |
| | hemicellulase | 232 HU/g | 98.7 | 106.9 |

From these results it is clear that during storage and transport the mixture of yeast, ascorbic acid and enzymes has become inhomogeneous.

### Example 2

The tests were carried out using fresh baker's yeast, starting with normal cultivation of strain 210 Ng, (CBS 406.87). This product has a moisture content of approximately 68% and a protein content of approximately 50% on a dry weight basis.

1000 g of this compressed yeast was crumbled and mixed with 18 g of Fermizyme® H₁₀₀₀ (Gist-brocades) having a hemicellulase activity of 13,500 HU/g and an α-amylase activity of 942 PU/g. This mixture was extruded via a laboratory extruder in a block form (height and width of 3.0 cm). Pieces of 12 cm length were cut and wrapped in cellophane. The pieces were stored at 4°C.

Standard gassing and baking tests were done after about 24 hours and after 2 weeks of storage.

Standard yeast gassing performance tests were carried out by mixing 300 mg of instant dry yeast as such with 62.5 g of flour. After addition of 34.4 ml of a solution containing 1.25 g of NaCl, the mass was mixed for 6 minutes at 28°C. The volume of gas produced within the period of 10 to 175 minutes after the start of mixing was determined in ml at 28°C and 10⁵ Pa (760 mm Hg).

Baking trials were done by preparing puploaves. As a reference 200 g of wheat flour, 2% compressed yeast , 4 g salt, 3 g sugar, 50 ppm ascorbic acid and 106 ml water were mixed in a pin mixer for 6 minutes and 15 seconds. The dough temperature was 27°C. Directly after mixing the dough was divided into two 150 g dough pieces and proofed for 45 minutes in a proofing cabinet at 31°C and 85% RH. After this period the doughs were moulded, and given an intermediate proof of 25 minutes at 31°C and 85% RH, again moulded, shaped, and panned and given a final proof of 70 minutes at 31°C. Afterwards the fully proofed doughs were baked in an electric oven at 225°C for 20 minutes. After cooling down to to room temperature the volumes of the loaves were measured by rapeseed displacement method. Afterwards break and shred of the breads was analysed. After 24 hours of storage the crumb quality was analysed by a qualified baker. Results are given in Table 2.

**TABLE 2**

| | Gas prod. (ml) | Loaf Volume (ml) | Break* & Shred | Crumb* Structure |
|---|---|---|---|---|
| 2% compressed yeast + 360 ppm Fermizyme® H₁₀₀₀ | 360 | 504 | 6.5 | 6.0 |
| | | 604 | 8.0 | 8.0 |
| 2% compressed yeast stored (2 wks) + 360 ppm Fermizyme® H₁₀₀₀ | 328 | 570 | 7.5 | 8.0 |

| 2% coformulated yeast | | | | |
|---|---|---|---|---|
| fresh (24 hrs) | 360 | 596 | 8.0 | 8.0 |
| stored (2 wks) | 332 | 575 | 7.5 | 8.0 |

| | | | | |
|---|---|---|---|---|
| * Figures are given on a scale in between 1 (bad) and 10 (excellent). | | | | |

From these results it can be seen that the enzyme preparation coformulated in the yeast is fully active both with fresh and stored yeast. The compressed yeast is not hindered or inactivated by the presence of this enzyme preparation.

### Example 3

### Experiment 1:

The test (experiment 1 to 7) were carried out using fresh baker's yeast starting with normal cultivation of strain 210 Ng (CBS 406.87). This product has a moisture content of approximately 68% and a protein content of approximately 50% on dry weight.

This block yeast was compressed to remove extracellular moisture. By this means the moisture content was reduced to 66%.

This yeast was crumbled and mixed with 1.0% (on basis of total dry weight) of the rehydration controlling agent Span - 60 ™ (sorbitan monostearate) using the following procedure:

The Span - 60 ™ was melted at 65°C and suspended in mains water of 60°C, using a high shear laboratory mixer. This emulsion was added to the crumbled yeast up to a concentration of 1.0% on total dry weight.

The combination was then extruded three times through a screen with holes of 0.8 mm to distribute the rehydration agent properly over the yeast.

From these particles 300 g were spread over a flat surface bowl. Over the premix surface the following powdery bread improving additives were poured:
A. 0.22% (on dry weight) of Fermizyme® P₂₀₀ (Gist-brocades) having an α-amylase activity of 4,740 PU/g.
B. 1.8% (on dry weight) of Fermizyme® H₁₀₀₀ (Gist-brocades) having a hemicellulase activity of 13,500 HU/g and an α-amylase activity of 942 PU/g.
C. 1.34% (on dry weight) of commercially available ascorbic acid (98.8% pure).

The product obtained from this exercise was pressed twice through a screen with holes of 0.8 mm to form again rod-shaped particles ready to be dried.

The drying of this product was performed in a laboratory scale fluid bed-dryer, consisting of a conical glass tube built on an air supply system, fenced by an appropiate screen to create a calm fluidisation pattern. The air supply system consisted of a two-way control valve, leading the air partly through an electrical heating section. By means of this control valve a constant outlet air temperature of 39°C was maintained during the drying period. The airflow was set at a superficial flow of 1.6 m/s at the bottom of the cone. The airflow was stopped as soon as the inlet-air temperature has reached a temperature of 45°C.

### Experiment 2

As described in experiment 1, except that the powdery bread improving processing aids did not include ascorbic acid.

### Experiment 3

As described in experiment 1, except that the powdery bread improving processing aids did not include Fermizyme® P₂₀₀.

### Experiment 4

As described in experiment 1, except that the powdery bread improving processing aids did not include Fermizyme® H₁₀₀₀.

### Experiment 5

As described in experiment 1, except that the powdery bread improving processing aids did not include Fermizyme® H₁₀₀₀ or ascorbic acid.

### Experiment 6

As described in experiment 1, except that the powdery bread improving processing aids did not include Fermizyme® P₂₀₀ or ascorbic acid.

### Experiment 7

As described in experiment 1, except that no powdery bread improving processing aids were added.

The various prepared yeast coformulations were analysed in their gassing capability and the ascorbic acid, and enzymes levels obtained.

The results of analyses obtained are summarized in Table 3.

**TABLE 3**

| Analytical results | Gassing performance (ml) | α-amylase activity (PU/g) | hemicellulase activity (HU/g) | Ascorbic acid content (%) | Dry matter content (%) |
|---|---|---|---|---|---|
| Exp. 1 | 245 | 12.4 | 230 | 1.02 | 95.8 |
| Exp. 2 | 259 | 15.5 | 210 | 0.00 | 96.1 |
| Exp. 3 | 241 | 6.1 | 193 | 1.10 | 95.7 |
| Exp. 4 | 243 | 7.3 | 0.0 | 1.04 | 96.0 |
| Exp. 5 | 259 | 9.9 | 0.0 | 0.00 | 95.9 |
| Exp. 6 | 255 | 6.1 | 0.0 | 0.00 | 95.5 |
| Exp. 7 | 249 | 0.0 | 0.0 | 0.00 | 96.0 |

Also baking experiments were done by preparing puploaves. As a reference 200 g of wheat flour, 1.2 g Fermipan® (Gist-brocades) instant yeast, 4 g salt, 3 g sugar, 50 ppm ascorbic acid and 111 ml water were mixed in a pin mixer for 6 minutes and 15 seconds. The dough temperature was 27°C. In all cases where Fermipan® was used coformulated with ascorbic acid, no ascorbic acid was added. Directly after mixing the dough was divided into two 150 g dough pieces and proofed for 45 minutes in a proofing cabinet at 31°C and 85% RH. After this period the doughs were moulded, and given an intermediate proof of 25 minutes at 31°C and 85% RH, again moulded, shaped, and panned and given a final proof of 70 minutes at 31°C. Afterwards the fully proofed doughs were baked in an electric oven at 225°C for 20 minutes. After cooling down to to room temperature the volumes of the loaves were measured by the rapeseed displacement method. Afterwards break and shred of the breads was analysed. After 24 hours of storage the crumb quality was analysed by a qualified baker. Results are given in Table 4.

**TABLE 4**

| | Loaf volume (ml) | Break* & Shred | Crumb* Structure |
|---|---|---|---|
| Reference | 488 | 6.5 | 6.0 |
| Exp.1 | 577 | 8.0 | 8.0 |
| Exp.2 | 586 | 8.0 | 8.0 |
| Exp.3 | 564 | 8.0 | 7.5 |
| Exp.4 | 538 | 7.5 | 7.0 |
| Exp.5 | 543 | 7.5 | 7.0 |
| Exp.6 | 545 | 7.5 | 7.0 |
| Exp.7 | 494 | 6.5 | 6.0 |

| | | | |
|---|---|---|---|
| * Figures are given on a scale in between 1 (bad) and 10 (excellent). | | | |

From these results it is clear, that ascorbic acid and/or enzymes coformulated in the instant yeast are fully able to show their activity in breadmaking.

### Example 4

450 g of coformulated instant dry yeast prepared as described in Experiment 1 of Example 3 was packed in a normal instant yeast pack under reduced pressure. This pack was transported vertically (see Example 1) by a heavy goods vehicle over about 2500 km.

Afterwards the homogenity of its contents was tested by opening the pack at three places: near the top, in the middle and near the bottom of the pack and drawing samples of 25 g each.

The quantities of ascorbic acid, fungal α-amylase and hemicellulase found in each of these samples are given in Table 5.

**Table 5**

| Activity | Before transport | After transport | | | After sieving | |
|---|---|---|---|---|---|---|
| | | top | middle | bottom | particles | dust |
| α-amylase (Pu/g) | 12.4 | 12.7 | 12.2 | 12.6 | 12.3 | 11.1 |
| hemicellulase (HU/g) | 230 | 224 | 238 | 231 | 221 | 235 |
| ascorbic acid (%) | 1.02 | 1.00 | 0.99 | 1.03 | 1.05 | N.D. |
| N.D.: not quantitatively detectable | | | | | | |

From these results it is clear that coformulated instant yeast is a homogeneous product.

Extra proof is gathered by pouring out 200 g of the coformulated instant yeast from the transported pack onto a sieve having pores of 0.15 mm diameter. Separation was forced by using a basket shaker (Fritsche type 03.502). 10 minutes of intensive shaking produced only 400 mg of dust. Analysis of coformulated particles and dust (see Table 5) showed a constant ratio of enzyme to yeast mass leading to the conclusion that the coformulated product is completely homogeneous.

## Claims

1. A process for the production of a coformulated composition comprising yeast and an effective amount of a processing aid which comprises adding the processing aid in dry or solution form to yeast to form a mixture and simultaneously or subsequently extruding the mixture and optionally drying it.

2. A process according to claim 1 whereby the drying takes place in a fluid bed-dryer.

3. A process according to claim 1 wherein the processing aid comprises an enzyme.

4. A process according to claim 3 wherein the enzyme comprises a carbohydrase, a protein modifying enzyme, a redox enzyme, a peptidyl transferase or a lipid modifying enzyme.

5. A process according to claim 4 wherein the enzyme comprises α-amylase, amyloglucosidase, hemicellulase, cellulase, glucanase, protease, peptidase, glucose oxidase, sulfhydryl oxidase, lipoxidase, γ-glutamyl transferase, lipase or phospholipase.

6. A process according to claim 1-5 wherein the yeast to which the processing aid is added, is baker's yeast.

7. Use of a coformulated composition produced by the process of claims 1-6 in the production of a baked product.

## Patentansprüche

1. Verfahren zum Herstellen einer coformulierten Zusammensetzung, enthaltend Hefe und eine wirksame Menge eines Verarbeitungshilfsmittels, wobei das Verarbeitungshilfsmittel in trockener Form oder in Lösungsform einer Hefe zugegeben wird, um ein Gemisch zu bilden, und gleichzeitig oder nachfolgend das Gemisch extrudiert sowie gegebenenfalls getrocknet wird.

2. Verfahren nach Anspruch 1, wobei das Trocknen in einem Fließbetttrockner stattfindet.

3. Verfahren nach Anspruch 1, worin das Verarbeitungshilfsmittel ein Enzym enthält.

4. Verfahren nach Anspruch 3, worin das Enzym eine Carbohydrase, ein proteinmodifizierendes Enzym, ein Redoxenzym, eine Peptidyltransferase oder ein lipidmodifizierendes Enzym enthält.

5. Verfahren nach Anspruch 4, worin das Enzym α-Amylase, Amyloglucosidase, Hemicellulase, Cellulase, Glucanase, Protease, Peptidase, Glucoseoxidase, Sulfhydryloxidase, Lipoxidase, γ-Glutamyltransferase, Lipase oder Phospholipase enthält.

6. Verfahren nach Anspruch 1 bis 5, worin die Hefe, der das Verarbeitungshilfsmittel zugegeben wird, Bäckerhefe ist.

7. Verwendung einer coformulierten Zusammensetzung, die durch das Verfahren nach den Ansprüchen 1 bis 6 erhalten worden ist, zur Herstellung einer Backware.

## Revendications

1. Procédé de préparation d'une composition coformulée comprenant de la levure et une quantité efficace d'une aide à la mise en oeuvre, qui comprend l'addition de l'aide à la mise en oeuvre sous forme sèche ou en solution à la levure, de manière à former un mélange et simultanément ou ensuite, extrusion du mélange et facultativement, séchage de celui-ci.

2. Procédé suivant la revendication 1, dans lequel le séchage se fait dans un séchoir à lit fluide.

3. Procédé suivant la revendication 1, dans lequel l'aide à la mise en oeuvre comprend une enzyme.

4. Procédé suivant la revendication 3, dans lequel l'enzyme comprend une carbohydrase, une enzyme modifiant les protéines, une enzyme redox, une peptidyltransférase ou une enzyme modifiant les lipides.

5. Procédé suivant la revendication 4, dans lequel l'enzyme comprend une α-amylase, une amyloglucosidase, une hémicellulase, une cellulase, une glucanase, une protéase, une peptidase, une glucose oxydase une sulfhydryloxydase, une lipoxydase, une γ-glutamyltransférase, une lipase ou une phospholipase.

6. Procédé suivant les revendications 1 à 5, dans lequel la levure à laquelle on ajoute l'aide à la mise en oeuvre, est de la levure de boulangerie.

7. Utilisation d'une composition coformulée produite par le procédé des revendications 1 à 6, dans la préparation d'un produit de boulangerie.
